(19) Europäisches Patentamt

European Patent Office

Office européen des brevets

(11) **EP 2 259 477 B1**

## (12) EUROPEAN PATENT SPECIFICATION

(45) Date of publication and mention
of the grant of the patent:
**19.07.2017 Bulletin 2017/29**

(51) Int Cl.:
*H04L 1/00* *(2006.01)* *H04L 27/34* *(2006.01)*
*H04L 1/18* *(2006.01)*

(21) Application number: **10178347.0**

(22) Date of filing: **21.02.2001**

(54) **Hybrid ARQ method with signal constellation rearrangement**

Hybrides Brückenverfahren mit Signalkonstellation-Neuanordnung

Procédé ARQ hybride avec réorganisation de constellation de signal

(84) Designated Contracting States:
**AT BE CH CY DE DK ES FI FR GB GR IE IT LI LU
MC NL PT SE TR**

(43) Date of publication of application:
**08.12.2010 Bulletin 2010/49**

(62) Document number(s) of the earlier application(s) in
accordance with Art. 76 EPC:
**06021982.1 / 1 760 928**
**04001471.4 / 1 427 128**
**01923594.4 / 1 293 059**

(73) Proprietor: **Panasonic Intellectual Property
Corporation
of America
Torrance, CA 90503 (US)**

(72) Inventors:
• **Golitschek Edler von Elbwart, Alexander
63225 Langen (DE)**
• **Wengerter, Christian
63225 Langen (DE)**
• **Schmitt, Michael Philipp
63225 Langen (DE)**
• **Seidel, Eiko
63225 Langen (DE)**

(74) Representative: **Grünecker Patent- und
Rechtsanwälte
PartG mbB
Leopoldstraße 4
80802 München (DE)**

(56) References cited:
**EP-A- 0 938 207    US-A- 6 138 260**

**Description**

The present invention relates to a hybrid ARQ retransmission method in a communication system.

A common technique in communication systems with unreliable and time-varying channel conditions is to correct errors based on automatic repeat request (ARQ) schemes together with a forward error correction (FEC) technique called hybrid ARQ (HARQ). If an error is detected by a commonly used cyclic redundancy check (CRC), the receiver of the communication system requests the transmitter to resend the erroneously received data packets.

S. Kallel, Analysis of a type II hybrid ARQ scheme with code combining, IEEE Transactions on Communications, Vol.38, No. 8, August 1990 and S. Kallel, R. Link, S. Bakhtiyari, Throughput performance of Memory ARQ schemes, IEEE Transactions on Vehicular Technology, Vol.48, No. 3, May 1999 define three different types of ARQ schemes:

- Type I: The erroneous received packets are discarded and a new copy of the same packet is retransmitted and decoded separately. There is no combining of earlier and later received versions of that packet.

- Type II: The erroneous received packets are not discarded, but are combined with some incremental redundancy bits provided by the transmitter for subsequent decoding. Retransmitted packets sometimes have higher coding rates and are combined at the receiver with the stored values. That means that only little redundancy is added in each retransmission.

- Type III: Is the same as Type II with the constraint each retransmitted packet is now self-decodable. This implies that the transmitted packet is decodable without the combination with previous packets. This is useful if some packets are damaged in such a way that almost no information is reusable.

Types II and III schemes are obviously more intelligent and show a performance gain with respect to Type I, because they provide the ability to reuse information from of previously received erroneous packets. There exist basically three schemes of reusing the redundancy of previously transmitted packets:

- Soft-Combining
- Code-Combining
- Combination of Soft- and Code-Combining

Soft-Combining

Employing soft-combining the retransmission packets carry identical symbols compared with the previously received symbols. In this case the multiple received packets are combined either by a symbol-by-symbol or by a bit-by-bit basis as for example disclosed in D. Chase, Code combining: A maximum-likelihood decoding approach for combining an arbitrary number of noisy packets, IEEE Trans. Commun., Vol. COM-33, pp. 385-393, May 1985 or B.A. Harvey and S. Wicker, Packet Combining Systems based on the Viterbi Decoder, IEEE Transactions on Communications, Vol. 42, No. 2/3/4, April 1994. By combining this soft-decision values from all received packets the reliabilities of the transmitted bits will increase linearly with the number and power of received packets. From a decoder point of view the same FEC scheme (with constant code rate) will be employed over all transmissions. Hence, the decoder does not need to know how many retransmissions have been performed, since it sees only the combined soft-decision values. In this scheme all transmitted packets will have to carry the same number of symbols.

Code-Combining

Code-combining concatenates the received packets in order to generate a new code word (decreasing code rate with increasing number of transmission). Hence, the decoder has to be aware of the FEC scheme to apply at each retransmission instant. Code-combining offers a higher flexibility with respect to soft-combining, since the length of the retransmitted packets can be altered to adapt to channel conditions. However, this requires more signaling data to be transmitted with respect to soft-combining.

Combination of Soft- and Code-Combining

In case the retransmitted packets carry some symbols identical to previously transmitted symbols and some code-symbols different from these, the identical code-symbols are combined using soft-combing as described in the section titled "Soft Combining" while the remaining code-symbols will be combined using code-combining. Here, the signaling requirements will be similar to code-combining.

As it has been shown in M.P. Schmitt, Hybrid ARQ Scheme employing TCM and Packet Combining, Electronics Letters Vol. 34, No. 18, September 1998 that HARQ performance for Trellis Coded Modulation (TCM) can be enhanced by rearranging the symbol constellation for the retransmissions. There, the performance gain results from the maximizing the Euclidean distances between the mapped symbols over the retransmissions, because the rearrangement has been performed on a symbol basis.

Considering high-order modulation schemes (with modulation symbols carrying more than two bits) the combining methods employing soft-combining have a major drawback: The bit reliabilities within soft-combined symbols will be in a constant ratio over all retransmissions, i.e. bits which have been less reliable from previous received transmissions will still be less reliable after having received further transmissions and, analogous, bits which have been more reliable from previous received transmissions will still be more reliable after having received further transmissions.

The varying bit reliabilities evolve from the constraint of two-dimensional signal constellation mapping, where modulation schemes carrying more than 2 bits per symbol cannot have the same mean reliabilities for all bits under the assumption that all symbols are transmitted equally likely. The term mean reliabilities is consequently meant as the reliability of a particular bit over all symbols of a signal constellation.

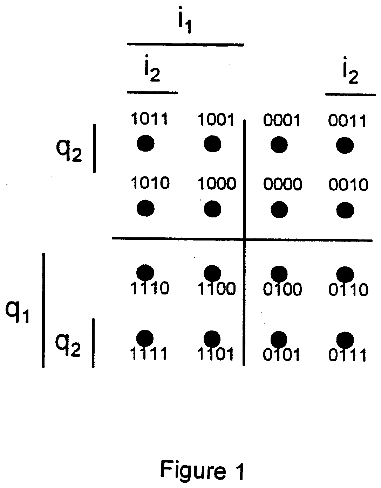

Employing a signal constellation for a 16 QAM modulation scheme according to Figure 1 showing a Gray encoded signal constellation with a given bit-mapping order $i_1 q_1 i_2 q_2$, the bits mapped onto the symbols differ from each other in mean reliability in the first transmission of the packet. In more detail, bits $i_1$ and $q_1$ have a high mean reliability, as these bits are mapped to half spaces of the signal constellation diagram with the consequences that their reliability is independent from the fact of whether the bit transmits a *one* or a *zero*.

In contrast thereto, bits $i_2$ and $q_2$ have a low mean reliability, as their reliability depends on the fact of whether they transmit a *one* or a *zero*. For example, for bit $i_2$, ones are mapped to outer columns, whereas zeros are mapped to inner columns. Similarly, for bit $q_2$, ones are mapped to outer rows, whereas zeros are mapped to inner rows.

For the second and each further retransmissions the bit reliabilities will stay in a constant ratio to each other, which is defined by the signal constellation employed in the first transmission, i.e. bits $i_1$ and $q_1$ will always have a higher mean reliability than bits $i_2$ and $q_2$ after any number of retransmissions.

EP-A-938207 discloses an incremental redundancy transmission communication system, wherein data blocks for a time slot are transmitted after modulation of a certain type. In the next time slot, based on channel quality feedback, another modulation format may be utilized, such as 4 level (PSK), 8 level and 16 level (PSK or QAM) modulation. Further, the used coding and/or modulation format is indicated using an adaptation field. A channel quality indicator is used to denote the advisable or maximum allowable modulation format for subsequent assignments.

US 6,138,260 A discloses a Hybrid ARQ system within a multiple access wireless communications environment for recombining ARQ retransmission signals with information obtained from corresponding previously failed transmissions of the same signal, which had been sender-received within the air interface. Further, forward error correction (FEC) is implemented within an ARQ environment.

The object underlying the present invention is to provide a communication apparatus and a hybrid ARQ retransmission method with an improved error correction performance. This object is solved by an apparatus as set forth in claim 1 and a method as set forth in independent claim 6.

The apparatus and method subject to the invention is based on the recognition that in order to enhance the decoder performance, it would be quite beneficial to have equal or near to equal mean bit reliabilities after each received transmission of a packet. Hence, the idea underlying the invention is to tailor the bit reliabilities over the retransmissions in a way that the mean bit reliabilities get averaged out. This is achieved by choosing a predetermined first and at least second signal constellation for the transmissions, such that the combined mean bit reliabilities for the respective bits of all transmissions are nearly equal.

Hence, the signal constellation rearrangement results in a changed bit mapping, wherein the Euclidean distances between the modulation symbols can be altered from retransmission to retransmission due to the movement of the constellation points. As a result, the mean bit reliabilities can be manipulated in a desired manner and averaged out to increase the performance the FEC decoder at the receiver.

For a more in depth understanding of the present invention, preferred embodiments will be described in the following with reference to the accompanying drawings.

Figure 1 is an exemplary signal constellation for illustrating a 16 QAM modulation scheme with Gray encoded bit symbols,

figure 2 shows four examples for signal constellations for a 16 QAM modulation scheme with Gray encoded bit symbols,

figure 3 shows an exemplary signal constellation for 64-QAM Gray encoded bit symbols,

figure 4 shows six exemplary signal constellations for 64-QAM Gray encoded bit symbols

figure 5 is an exemplary embodiment of a communication system in which the method underlying the invention is employed, and

figure 6 explains details of the mapping unit shown in figure 5.

For a better understanding of the embodiments, in the following the concept of a Log-Likelihood-Ratio (*LLR*) will be described as a metric for the bit reliabilities. First the straight forward calculation of the bit *LLRs* within the mapped symbols for a single transmission will be shown. Then the *LLR* calculation will be extended to the multiple transmission case.

Single Transmission

The mean *LLR* of the *i*-th bit $b_n^i$ under the constraint that symbol $s_n$ has been transmitted for a transmission over a channel with additive white gaussian noise (AWGN) and equally likely symbols yields

$$LLR_{b_n^i|r_n}(r_n) = \log\left[\sum_{(m|b_m^i=b_n^i)} e^{-\frac{E_s}{N_0}\cdot d_{n,m}^2}\right] - \log\left[\sum_{(m|b_m^i\neq b_n^i)} e^{-\frac{E_s}{N_0}\cdot d_{n,m}^2}\right], \tag{1}$$

where $r_n = s_n$ denotes the mean received symbol under the constraint the symbol $s_n$ has been transmitted (AWGN case), $d_{n,m}^2$ denotes the square of the Euclidean distance between the received symbol $r_n$ and the symbol $s_m$, and $E_S/N_0$ denotes the observed signal-to-noise ratio.

It can be seen from Equation (1) that the *LLR* depends on the signal-to-noise ratio $E_S/N_0$ and the Euclidean distances $d_{n,m}$ between the signal constellation points.

Multiple Transmissions

Considering multiple transmissions the mean *LLR* after the *k*-th transmission of the *i*-th bit $b_n^i$ under the constraint that symbols $s_n^{(j)}$ have been transmitted over independent AWGN channels and equally likely symbols yields

$$LLR_{b_n^i|\prod_{j=1}^{k} r_n^{(j)}}(r_n^{(1)}, r_n^{(2)}, ..., r_n^{(k)}) = \log\left[\sum_{(m|b_m^i=b_n^i)} e^{-\sum_{j=1}^{k}\left(\frac{E_s}{N_0}\right)^{(j)}\cdot(d_{n,m}^{(j)})^2}\right] - \log\left[\sum_{(m|b_m^i\neq b_n^i)} e^{-\sum_{j=1}^{k}\left(\frac{E_s}{N_0}\right)^{(j)}\cdot(d_{n,m}^{(j)})^2}\right], \tag{2}$$

where *j* denotes the *j*-th transmission ((*j* - 1)-th retransmission).Analogous to the single transmission case the mean *LLRs* depend on the signal-to-noise ratios and the Euclidean distances at each transmission time.

If no constellation rearrangement is performed the Euclidean distances $d_{n,m}^{(j)} = d_{n,m}^{(1)}$ are constant for all transmissions and, hence, the bit reliabilities (*LLRs*) after *k* transmissions will be defined by the observed signal-to-noise ratio at each transmission time and the signal constellation points from the first transmission. For higher level modulation schemes (more than 2 bits per symbol) this results in varying mean *LLRs* for the bits, which in turn leads to different mean bit reliabilities. The differences in mean reliabilities remain over all retransmissions and lead to a degradation in decoder performance.

**16-QAM Strategy**

In the following, the case of a 16-QAM system will be exemplarily considered resulting in 2 high reliable and 2 low reliable bits, where for the low reliable bits the reliability depends on transmitting a *one* or a *zero* (see Figure 1). Hence, overall there exist 3 levels of reliabilities.

**Level 1** (High Reliability, 2 bits): Bit mapping for *ones* (*zeros*) separated into the positive (negative) real half space for the i-bits and the imaginary half space the q-bits. Here, there is no difference whether the *ones* are mapped to the positive or to the negative half space.

**Level 2** (Low Reliability, 2 bits): *Ones* (*zeros*) are mapped to inner (outer) columns for the i-bits or to inner (outer) rows for the q-bits. Since there is a difference for the *LLR* depending on the mapping to the inner (outer) columns and rows, Level 2 is further classified:

> **Level 2a:** Mapping of $i_n$ to inner columns and $q_n$ to inner rows respectively.

> **Level 2b:** Inverted mapping of Level 2a: Mapping of $i_n$ to outer columns and $q_n$ to outer rows respectively.

To ensure an optimal averaging process over the transmissions for all bits the levels of reliabilities have to be altered by changing the signal constellations according to the algorithms given in the following section.

It has to be considered that the bit-mapping order is open prior initial transmission, but has to remain through retransmissions, e.g. bit-mapping for initial transmission: $i_1q_1i_2q_2 \Rightarrow$ bit-mapping all retransmissions: $i_1q_1i_2q_2$.

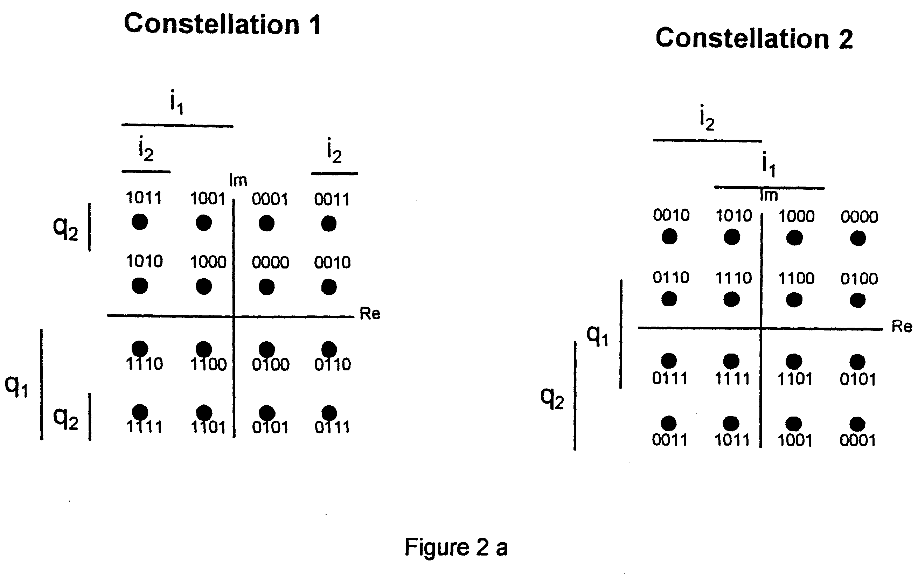

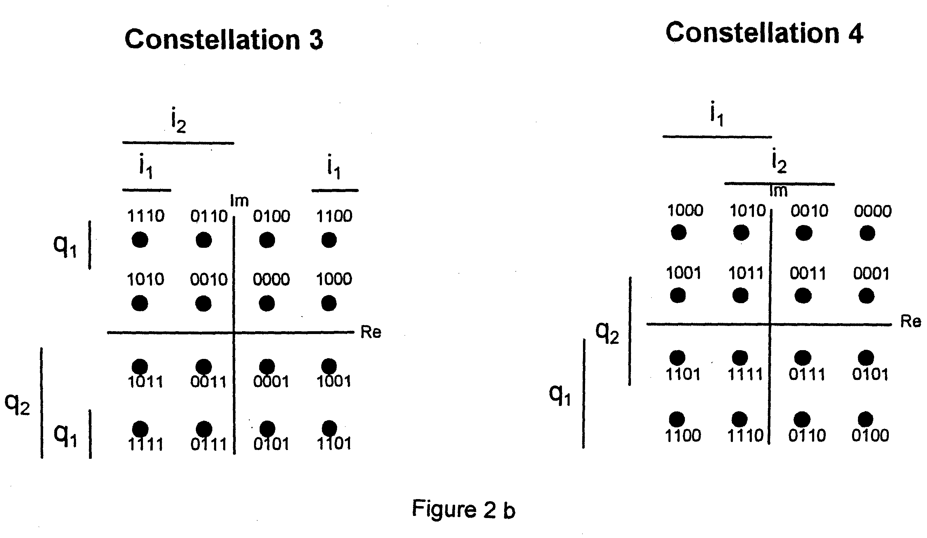

For the actual system implementation there are a number of possible signal constellations to achieve the averaging process over the retransmissions. Some examples for possible constellations are shown in Figure 2. The resulting bit reliabilities according to Figure 2 are given in Table 1.

| Constella-tion | bit $i_1$ | bit $q_1$ | bit $i_2$ | bit $q_2$ |
|---|---|---|---|---|
| 1 | High Reliability (Level 1) | High Reliability (Level 1) | Low Reliability (Level 2b) | Low Reliability (Level 2b) |
| 2 | Low Reliability (Level 2a) | Low Reliability (Level 2a) | High Reliability (Level 1) | High Reliability (Level 1) |
| 3 | Low Reliability (Level 2b) | Low Reliability (Level 2b) | High Reliability (Level 1) | High Reliability (Level 1) |
| 4 | High Reliability (Level 1) | High Reliability (Level 1) | Low Reliability (Level 2a) | Low Reliability (Level 2a) |

Table 1.    Bit reliabilities for 16-QAM according to signal constellations shown in Figure 2

Moreover, Table 2 provides some examples how to combine the constellations for the transmissions 1 to 4 (using 4 different mappings).

Table 2. Examples for Constellation Rearrangement strategies for 16-QAM (using 4 mappings) with signal constellations according to Figure 2 and bit reliabilities according to Table 1.

| Transmission No. | Scheme 1 (with Constellations) | Scheme 2 (with Constellations) | Scheme 3 (with Constellations) | Scheme 4 (with Constellations) |
|---|---|---|---|---|
| 1 | 1 | 1 | 1 | 1 |
| 2 | 2 | 2 | 3 | 3 |
| 3 | 3 | 4 | 2 | 4 |
| 4 | 4 | 3 | 4 | 2 |

Two algorithms are given which describe schemes using 2 or 4 mappings overall. The approach using 2 mappings results in less system complexity, however has some performance degradation with respect to the approach using 4 mappings. The mapping for i- and q-bits can be done independently and, hence, in the following the mapping for the i-bits only is described. The algorithms for the q-bits work analog.

**16-QAM Algorithms**

A. Using 2 Mappings

1. Step (1. Transmission)

Choose Level 1 for $i_1$ $\Rightarrow$ Level 2 for $i_2$ - free choice if 2a or 2b

$\Rightarrow$ **1. Mapping defined**

2. Step (2. Transmission)

Choose Level 1 for $i_2$ $\Rightarrow$ Level 2 for $i_1$ - free choice if 2a or 2b

$\Rightarrow$ **2. Mapping defined**

3. Step

Options:

    (a) Go to 1. Step and proceed with alternating between 1. and 2. Mapping
    (b) Use 2. Mapping and proceed with using 2 times 1. Mapping, 2 times 2. Mapping and so on...

B. Using 4 Mappings

1. Step (1. Transmission)

Choose Level 1 for $i_1$ $\Rightarrow$ Level 2 for $i_2$ - free choice if 2a or 2b

$\Rightarrow$ **1. Mapping defined**

2. Step (2. Transmission)

Choose Level 1 for $i_2$ $\Rightarrow$ Level 2 for $i_1$ - free choice if 2a or 2b

$\Rightarrow$ **2. Mapping defined**

3. Step (3. Transmission)

Options:

    (a) Choose Level 1 for $i_1$ $\Rightarrow$ Level 2 for $i_2$ with following options

        (a1) if in 1. Transmission 2a was used then use 2b
        (a2) if in 1. Transmission 2b was used then use 2a

    (b) Choose Level 1 for $i_2$ $\Rightarrow$ Level 2 for $i_1$ with following options

        (b1) if in 2. Transmission 2a was used then use 2b
        (b2) if in 2. Transmission 2b was used then use 2a

$\Rightarrow$ **3. Mapping defined**

4. Step (4. Transmission)

if option (a) in 3. Step

Choose Level 1 for $i_2$ $\Rightarrow$ Level 2 for $i_1$ with following options

    (a1) if in 2. Transmission 2a was used then use 2b
    (a2) if in 2. Transmission 2b was used then use 2a

if option (b) in 3. Step

Choose Level 1 for $i_1$ $\Rightarrow$ Level 2 for $i_2$ with following options

    (a1) if in 1. Transmission 2a was used then use 2b
    (a2) if in 1. Transmission 2b was used then use 2a

$\Rightarrow$ **4. Mapping defined**

5. Step (5., 9., 13., ... Transmission)

Choose one out of 4 defined mappings

6. Step (6., 10., 14., ... Transmission)

Choose one out of 4 defined mappings except

    (a) the mapping used in 5. Step (previous transmission)
    (b) the mapping giving Level 1 reliability to the same bit as in previous transmission

7. Step (7., 11., 15., ... Transmission)

Choose one out of 2 remaining mappings not used in last 2 transmissions

8. Step (8., 12., 16., ... Transmission)

Choose mapping not used in last 3 transmissions

9. Step

Go to 5. Step

**64-QAM Strategy**

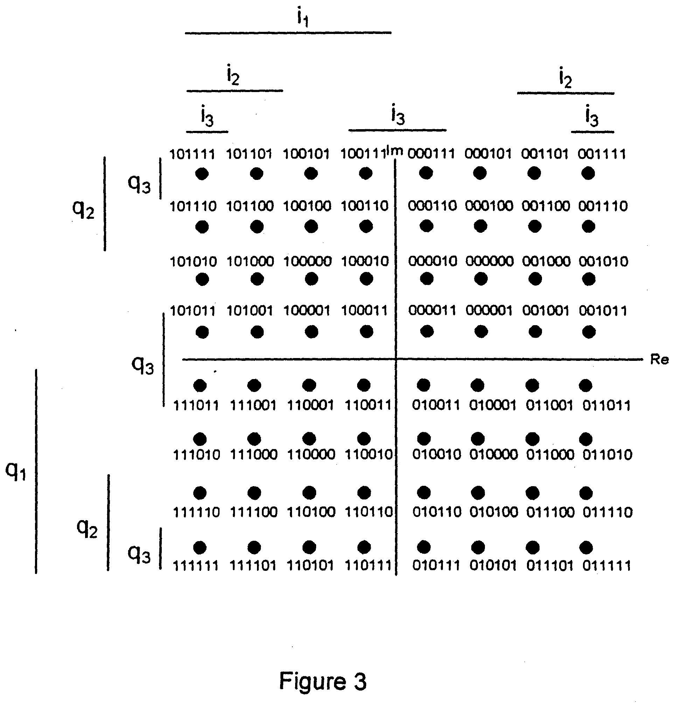

In case of a 64-QAM system there will be 2 high reliable, 2 medium reliable and 2 low reliable bits, where for the low and medium reliable bits the reliability depends on transmitting a *one* or a *zero* (see Figure 3). Hence, overall there exist 5 levels of reliabilities.

**Level 1** (High Reliability, 2 bits): Bit mapping for *ones* (*zeros*) separated into the positive (negative) real half space for the i-bits and the imaginary half space for the q-bits. Here, there is no difference whether the *ones* are mapped to the positive or to the negative half space.

**Level 2** (Medium Reliability, 2 bits): *Ones* (*zeros*) are mapped to 4 inner and 2x2 outer columns for the i-bits or to 4 inner and 2x2 outer rows for the q-bits. Since there is a difference for the LLR depending on the mapping to the inner or outer column/row Level 2 is further classified:

    **Level 2a:** Mapping of $i_n$ to 4 inner columns and $q_n$ to 4 inner rows respectively.

    **Level 2b:** Inverted mapping of 2a: $i_n$ to outer columns and $q_n$ to outer rows respectively

**Level 3** (Low Reliability, 2 bits): *Ones* (*zeros*) are mapped to columns 1-4-5-8/2-3-6-7 for the i-bits or to rows 1-4-5-8/2-3-6-7 for the q-bits. Since there is a difference for the *LLR* depending on the mapping to columns/rows 1-4-5-8 or 2-3-6-7 Level 3 is further classified:

**Level 3a:** Mapping of $i_n$ to columns 2-3-6-7 and $q_n$ to rows 2-3-6-7 respectively

**Level 3b:** Inverted mapping of 2a: $i_n$ to columns 1-4-5-8 and $q_n$ to rows 1-4-5-8 respectively

To ensure an optimal averaging process over the transmissions for all bits the levels of reliabilities have to be altered by changing the signal constellations according to the algorithms given in the following section.

It has to be considered that the bit-mapping order is open prior initial transmission, but has to remain through retransmissions, e.g. bit-mapping for initial transmission: $i_1q_1i_2q_2\ i_3q_3 \Rightarrow$ bit-mapping all retransmissions: $i_1q_1i_2q_2\ i_3q_3$.

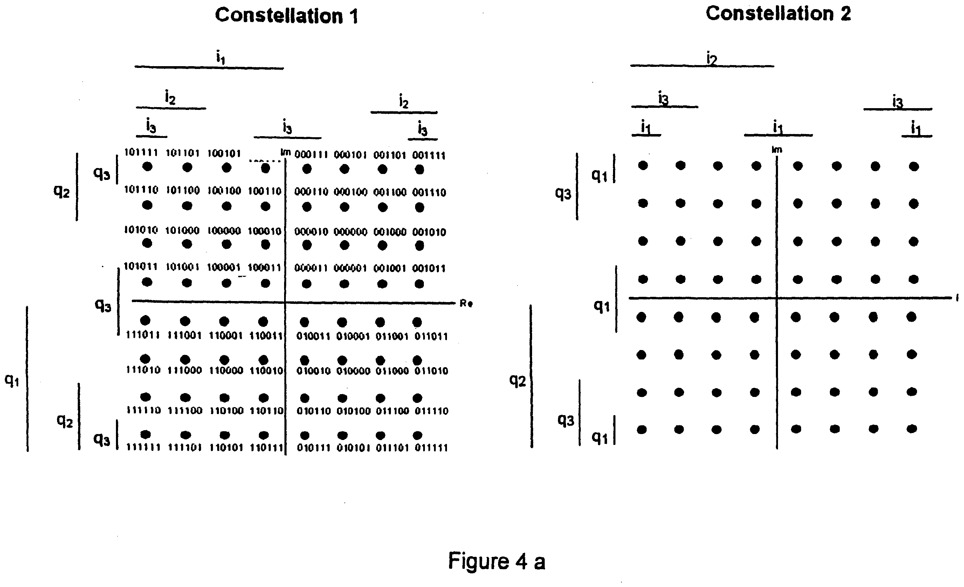

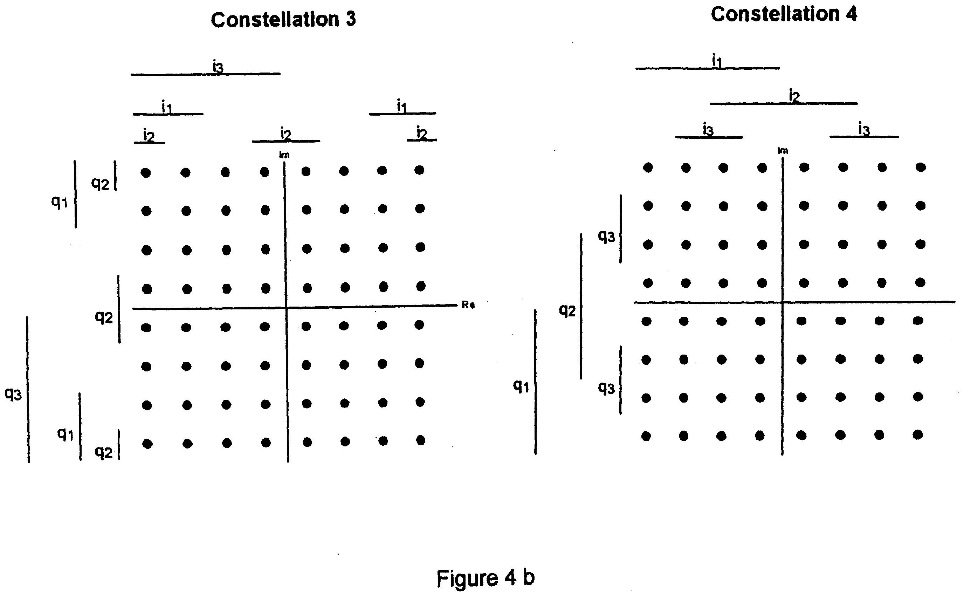

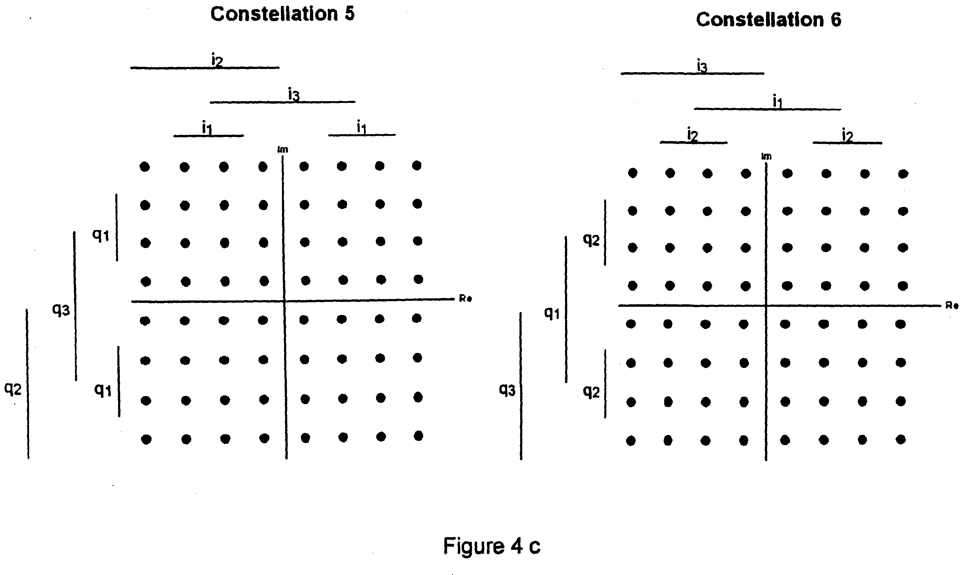

Analog to 16-QAM for the actual system implementation there are a number of possible signal constellations to achieve the averaging process over the retransmissions. Some examples for possible constellations are shown in Figure 4. The resulting bit reliabilities according to Figure 4 are given in Table 3.

| Constel-lation | bit $i_1$ | bit $q_1$ | bit $i_2$ | bit $q_2$ | bit $i_3$ | bit $q_3$ |
|---|---|---|---|---|---|---|
| 1 | High Reliability (Level 1) | High Reliability (Level 1) | Middle Reliability (Level 2b) | Middle Reliability (Level 2b) | Low Reliability (Level 3b) | Low Reliability (Level 3b) |
| 2 | Low Reliability (Level 3b) | Low Reliability (Level 3b) | High Reliability (Level 1) | High Reliability (Level 1) | Middle Reliability (Level 2b) | Middle Reliability (Level 2b) |
| 3 | Middle Reliability (Level 2b) | Middle Reliability (Level 2b) | Low Reliability (Level 3b) | Low Reliability (Level 3b) | High Reliability (Level 1) | High Reliability (Level 1) |
| 4 | High Reliability (Level 1) | High Reliability (Level 1) | Middle Reliability (Level 2a) | Middle Reliability (Level 2a) | Low Reliability (Level 3a) | Low Reliability (Level 3a) |
| 5 | Low Reliability (Level 3a) | Low Reliability (Level 3a) | High Reliability (Level 1) | High Reliability (Level 1) | Middle Reliability (Level 2a) | Middle Reliability (Level 2a) |
| 6 | Middle Reliability (Level 2a) | Middle Reliability (Level 2a) | Low Reliability (Level 3a) | Low Reliability (Level 3a) | High Reliability (Level 1) | High Reliability (Level 1) |

Table 3. Bit reliabilities for 64-QAM according to signal constellations shown in Figure 4.

Moreover, Table 4 provides some examples how to combine the constellations for the transmissions 1 to 6 (using 6 different mappings).

Table 4. Examples for Constellation Rearrangement strategies for 64-QAM (using 6 mappings) with signal constellations according to Figure 4 and bit reliabilities according to Table 3.

| Transmission No. | Scheme 1 (with Constellations) | Scheme 2 (with Constellations) | Scheme 3 (with Constellations) | Scheme 4 (with Constellations) |
|---|---|---|---|---|
| 1 | 1 | 1 | 1 | 1 |
| 2 | 2 | 3 | 5 | 3 |
| 3 | 3 | 2 | 6 | 2 |
| 4 | 4 | 4 | 4 | 6 |
| 5 | 5 | 5 | 2 | 5 |

(continued)

| Transmission No. | Scheme 1 (with Constellations) | Scheme 2 (with Constellations) | Scheme 3 (with Constellations) | Scheme 4 (with Constellations) |
|---|---|---|---|---|
| 6 | 6 | 6 | 3 | 4 |

Two algorithms are given which describe schemes using 3 or 6 mappings overall.

The approach using 3 mappings results in less system complexity, however has some performance degradation with respect to the approach using 6 mappings.

The mapping for i- and q-bits can be done independently and, hence, in the following the mapping for the i-bits only is described. The algorithms for the q-bits work analog.

**64-QAM Algorithms**

A. Using 3 Mappings

1. Step (1. Transmission)

1. Step (1. Transmission)

Choose Level 1 for $i_1$
Choose Level 2 for $i_2$ (free choice if 2a or 2b) $\Rightarrow$ Level 3 for $i_3$ - free choice if 3a or 3b

$\Rightarrow$ **1. Mapping defined**

2. Step (2. Transmission)

Options:

(a) Choose Level 1 for $i_2$

Choose Level 2 for $i_3$ (free choice if 2a or 2b) $\Rightarrow$ Level 3 for $i_1$ - free choice if 3a or 3b

(b) Choose Level 1 for $i_3$

Choose Level 2 for $i_1$ (free choice if 2a or 2b) $\Rightarrow$ Level 3 for $i_2$ - free choice if 3a or 3b

$\Rightarrow$ **2. Mapping defined**

3. Step (3. Transmission)

if (a) in 2. Step

Choose Level 1 for $i_3$
Choose Level 2 for $i_1$ (free choice if 2a or 2b) $\Rightarrow$ Level 3 for $i_2$ - free choice if 3a or 3b if (b) in 2. Step
Choose Level 1 for $i_2$
Choose Level 2 for $i_3$ (free choice if 2a or 2b) $\Rightarrow$ Level 3 for $i_1$ - free choice if 3a or 3b

$\Rightarrow$ **3. Mapping defined**

4. Step (4., 7., 10, ... Transmission)

Choose one out of 3 defined mappings

5. Step (5., 8., 11, ... Transmission)

Choose one out of 3 defined mappings except the mapping used in previous transmission

6. Step (6., 9., 12, ... Transmission)

Choose one out of 3 defined mappings except the mapping used in last 2 transmissions

7. Step

Go to 4. Step

B. Using 6 Mappings

1. Step (1. Transmission)

Choose Level 1 for $i_1$
Choose Level 2 for $i_2$ (free choice if 2a or 2b) $\Rightarrow$ Level 3 for $i_3$ - free choice if 3a or 3b

$\Rightarrow$ **1. Mapping defined**

2. Step (2. Transmission)

Options:

(a) Choose Level 1 for $i_2$

Choose Level 2 for $i_3$ (free choice if 2a or 2b) $\Rightarrow$ Level 3 for $i_1$ - free choice if 3a or 3b

(b) Choose Level 1 for $i_3$

Choose Level 2 for $i_1$ (free choice if 2a or 2b) $\Rightarrow$ Level 3 for $i_2$ - free choice if 3a or 3b

$\Rightarrow$ **2. Mapping defined**

3. Step (3. Transmission)

if (a) in 2. Step

Choose Level 1 for $i_3$
Choose Level 2 for $i_1$ (free choice if 2a or 2b) $\Rightarrow$ Level 3 for $i_2$ - free choice if 3a or 3b

if (b) in 2. Step

Choose Level 1 for $i_2$
Choose Level 2 for $i_3$ (free choice if 2a or 2b) $\Rightarrow$ Level 3 for $i_1$ - free choice if 3a or 3b

$\Rightarrow$ **3. Mapping defined**

4. Step (4. Transmission)

Choose Level 1 for one bit out of $i_1$, $i_2$ or $i_3$
Choose Level 2 for one out of two remaining bits with following restrictions

(a1) if in one of the previous transmission 2a was used for this bit then use 2b
(a2) if in one of the previous transmission 2b was used for this bit then use 2a

$\Rightarrow$ Level 3 for remaining bit with following restrictions

(b1) if in one of the previous transmission 3a was used for this bit then use 3b
(b2) if in one of the previous transmission 3b was used for this bit then use 3a

$\Rightarrow$ **4. Mapping defined**

5. Step (5. Transmission)

Choose Level 1 for one out of two bits not having Level 1 in 4. Step
Choose Level 2 for one out of two bits not having Level 2 in 4. Step with following restrictions

(a1) if in one of the previous transmission 2a was used for this bit then use 2b
(a2) if in one of the previous transmission 2b was used for this bit then use 2a

$\Rightarrow$ Level 3 for remaining bit with following restrictions

(b1) if in one of the previous transmission 3a was used for this bit then use 3b
(b2) if in one of the previous transmission 3b was used for this bit then use 3a

$\Rightarrow$ **5. Mapping defined**

6. Step (6. Transmission)

Choose Level 1 for bit not having Level 1 in 4. Step and 5. Step
Choose Level 2 for bit not having Level 2 in 4. Step and 5. Step with following restrictions

(a1) if in one of the previous transmission 2a was used for this bit then use 2b
(a2) if in one of the previous transmission 2b was used for this bit then use 2a

$\Rightarrow$ Level 3 for remaining bit with following restrictions

(b1) if in one of the previous transmission 3a was used for this bit then use 3b
(b2) if in one of the previous transmission 3b was used for this bit then use 3a

$\Rightarrow$ **6. Mapping defined**

7. Step (7., 13., 19., ... Transmission)

Choose one out of 6 defined mappings

8. Step (8., 14., 20., ... Transmission)

Choose one out of 6 defined mappings except

(a) the mapping used in 7. Step (previous transmission)
(b) the mapping giving Level 1 reliability to the same bit as in previous transmission

9. Step (9., 15., 21., ... Transmission)

Choose one out of 6 defined mappings with giving Level 1 reliability to the bit not having Level 1 in last 2 transmissions

10. Step (10., 16., 22., ... Transmission)

Choose one out of 3 remaining mappings not used in last 3 transmissions

11. Step (11., 17., 23., ... Transmission)

Choose one out of 2 remaining mappings not used in last 4 transmissions

12. Step (12., 18., 24., ... Transmission)

Choose remaining mapping not used in last 5 transmissions

13. Step

Go to 7. Step

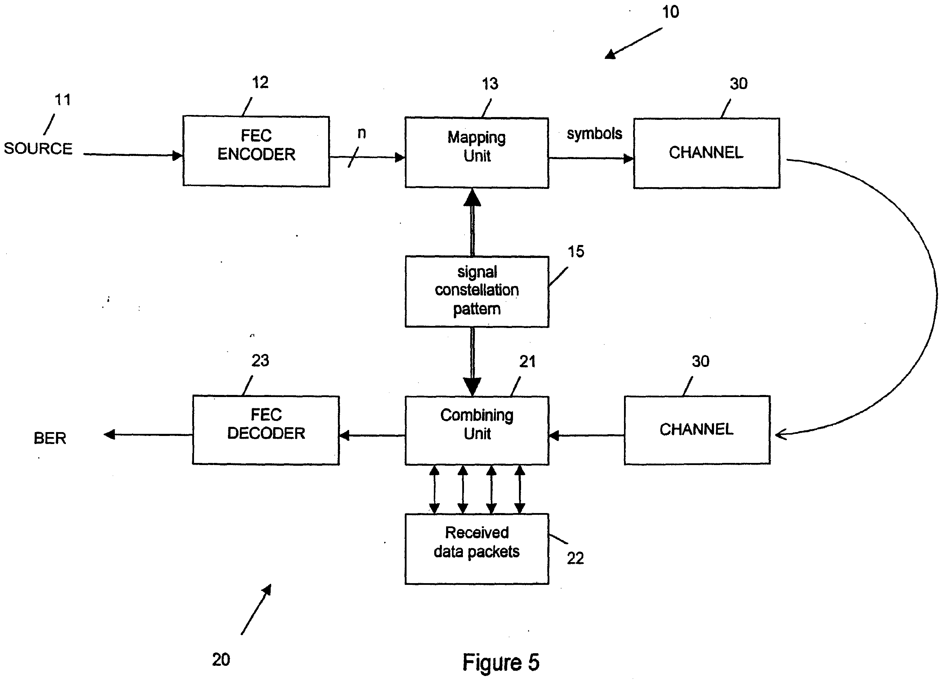

Figure 5 shows an exemplary embodiment of a communication system to which the present invention can be applied. More specifically, the communication system comprises a transmitter 10 and a receiver 20 which communicate through a channel 30 which can either be wire-bound or wireless, i.e. an air interface. From a data source 11, data packets are supplied to a FEC encoder 12, where redundancy bits are added to correct errors. The n bits output from the FEC decoder are subsequently supplied to a mapping unit 13 acting as a modulator to output symbols formed according to the applied modulation scheme stored as a constellation pattern in a table 15. Upon transmission over the channel 30, the receiver 20 checks the received data packets, for example, by means of a cyclic redundancy check (CRC) for correctness.

If the received data packets are erroneous, the same are stored in a temporary buffer 22 for subsequent soft combining with the retransmitted data packets.

A retransmission is launched by an automatic repeat request issued by an error detector (not shown) with the result that an identical data packet is transmitted from the transmitter 10. In the combining unit 21, the previously received erroneous data packets are soft-combined with the retransmitted data packets. The combining unit 21 also acts as a demodulator and the same signal constellation pattern stored in the table 15 is used to demodulate the symbol which was used during the modulation of that symbol.

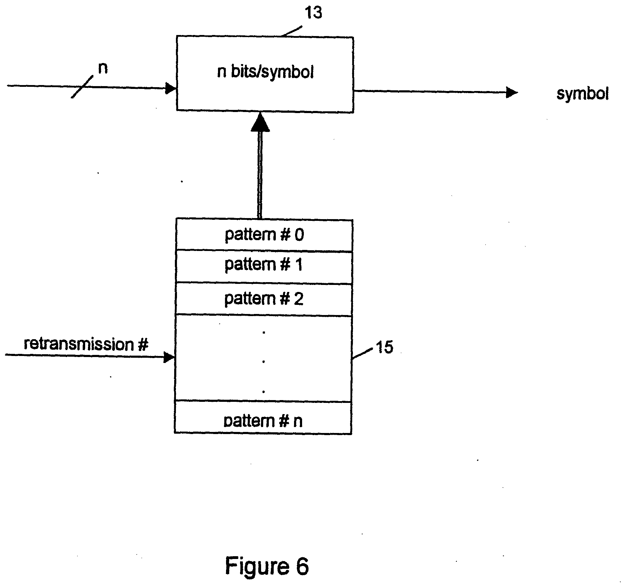

As illustrated in figure 6, the table 15 stores a plurality of signal constellation patterns which are selected for the individual (re)-transmissions according to a predetermined scheme. The scheme, i.e. the sequence of signal constellation patterns used for modulating/demodulating are either pre-stored in the transmitter and the receiver or are signaled by transmitter to the receiver prior to usage.

As mentioned before, the method underlying the invention rearranges the signal constellation patterns for the individual (re)-transmissions according to a predetermined scheme, such that the mean bit reliabilities are averaged out. Hence, the performance of the FEC decoder 23 is significantly improved, resulting in a low bit error rate (BER) output from the decoder.

According to an illustrative embodiment of the hybrid ARQ retransmission method in a communication system, data packets being encoded with a forward error correction (FEC) technique prior to transmission are retransmitted based on an automatic repeat request and subsequently soft-combined with previously received erroneous data packets either on a symbol-by-symbol or a bit-by-bit basis, the symbols of said erroneous data packets being modulated employing a predetermined first signal constellation and the symbols of the retransmitted data packets being modulated employing at least a predetermined second signal constellation, each symbol bit having a mean bit reliability defined by the individual bit reliabilities over all symbols of the predetermined signal constellation characterized in that the predetermined first and the at least second signal constellation for the data packets are chosen such that the combined mean bit reliabilities for the respective bits of all transmissions are averaged out.

According to the further embodiment of the retransmission method, the respective Euclidean distances between at least two modulated symbols of the first and respectively second signal constellation are different.

According to the further embodiment of the retransmission method, the employed modulation scheme is Quadrature Amplitude Modulation (QAM), wherein more than two bits are mapped onto one symbol.

According to the further embodiment of the retransmission method, the symbol bits of the data packets are Gray encoded.

According to the further embodiment of the retransmission method, the employed modulation scheme is 16 DAM and that during modulation one of two levels of mean bit reliabilities are assigned to each of the four symbol bits.

According to the further embodiment of the retransmission method, during modulation employing the first signal constellation, two bits of a symbol are assigned a high mean bit reliability and the two remaining bits of the symbol are assigned a low mean bit reliability and that during modulation employing the second signal constellation inverted mean bit reliabilities are assigned to the respective symbol bits.

According to the further embodiment of the retransmission method, the employed modulation scheme is 64 CAM and that during modulation one of three levels of mean bit reliabilities are assigned to each of the six symbol bits.

According to the further embodiment of the retransmission method, during modulation employing the fist signal constellation two bits of a symbol are as signed a high mean bit reliability, two further bits are assigned a medium mean bit reliability and two remaining bits of the symbol are assigned a low mean bit reliability and that during modulation employing the second signal constellation and a third signal constellation inverted mean bit reliabilities are assigned to respective symbol bits such that the sum of mean bit reliabilities for corresponding bits over all (re)-transmissions are near to equal.

According to an illustrative embodiment of a receiver in a communication system embodied to carry out the method according to any of claims 1-8 further comprises table means to store the first and the at least second signal constellation pattern.

According to the further embodiment of the receiver, the receiver further comprises storage means to store the sequence of signal constellations employed for modulating the symbol bits during all (re)-transmissions.

According to an illustrative embodiment of a transmitter in a communication system the transmitter further comprises table means to store the first and the at least second signal constellation pattern.

According to the further embodiment, the transmitter further comprises means to signal the sequence of signal constellations employed for modulating the symbol bits for all (re)-transmissions to the receiver.

**Claims**

1. A communication apparatus (10) performing an automatic repeat request transmission with a constellation rearrangement, comprising:

   a encoding section (12) that encodes data packets with a forward error correction;
   a mapping section (13) that maps the encoded data packets using a first signal constellation and a second signal constellation out of a plurality of predetermined signal constellations of a 16 or 64 Quadrature Amplitude Modulation scheme, to generate a first symbol and a second symbol respectively, each bit mapped onto the first symbol and the second symbol having an individual bit reliability over constellation points of the predetermined signal constellation; and
   a transmission section (30) that transmits the first symbol in a first transmission and transmits the second symbol in a retransmission;
   wherein, for each of the constellation points, a bit sequence to be mapped using the first constellation and a bit sequence to be mapped using the second constellation are different from each other in at least one of bit positions and logical values of the bits.

2. The communication apparatus according to claim 1, comprising means adapted to select the first signal constellation and the second signal constellation for the data packets (7) such that the mean bit reliabilities for the respective bits mapped onto the symbol are averaged out by combining the first symbol modulated using the first signal constellation with the second symbol modulated using the second signal constellation.

3. The communication apparatus according to claim 1 or 2, wherein the encoding section (12) is adapted to Gray encode the symbol bits of the data packets.

4. The communication apparatus according to one of claims 1-3, wherein the employed modulation scheme is 16 QAM and that during modulation one of two levels of mean bit reliabilities are assigned to each of the four symbol bits.

5. The communication apparatus according to one of claims 1-3, wherein the employed modulation scheme is 64 QAM and that during modulation one of three levels of mean bit reliabilities are assigned to each of the six symbol bits.

6. An ARQ transmission method with a constellation rearrangement in a communication apparatus comprising the following steps:

encoding data packets with a forward error correction;
mapping the encoded data packets using a first signal constellation and a second signal constellation out of a plurality of predetermined signal constellations of a 16 or 64 Quadrature Amplitude Modulation scheme, to generate a first symbol and a second symbol respectively, each bit mapped onto the first symbol and the second symbol having an individual bit reliability over constellation points of the predetermined signal constellation; and transmitting the first symbol in a first transmission and the second symbol in a retransmission;

wherein, for each of the constellation points, a bit sequence to be mapped using the first constellation and a bit sequence to be mapped using the second constellation are different from each other in s at least one of bit positions and logical values of the bits.

**Patentansprüche**

1. Kommunikationsvorrichtung (10), die eine automatische Wiederholungsanforderungsübertragung mit einer Konstellationsneuordnung ausführt, umfassend:

einen Codierabschnitt (12), der Datenpakete mit einer Vorwärtsfehlerkorrektur codiert;
einen Zuordnungsabschnitt (13), der die codierten Datenpakete unter Verwendung einer ersten Signalkonstellation und einer zweiten Signalkonstellation aus einer Vielzahl von vorbestimmten Signalkonstellationen eines 16 oder 64 QAM-Modulationsschemas zuordnet, um ein erstes Symbol bzw. ein zweites Symbol zu erzeugen, wobei jedes Bit dem ersten Symbol zugeordnet wird und das zweite Symbol eine individuelle Bitzuverlässigkeit gegenüber Konstellationspunkten der vorbestimmten Signalkonstellation aufweist; und
einen Übertragungsabschnitt (30), der das erste Symbol in einer ersten Übertragung überträgt und das zweite Symbol in einer erneuten Übertragung überträgt;
wobei für jeden der Konstellationspunkte eine unter Verwendung der ersten Konstellation zuzuordnende Bitsequenz und eine mit der zweiten Konstellation zuzuordnende Bitsequenz in Bitpositionen und/oder logischen Werten der Bits voneinander verschieden sind.

2. Kommunikationsvorrichtung nach Anspruch 1, umfassend Einrichtungen, die dazu eingerichtet sind, die erste Signalkonstellation und die zweite Signalkonstellation für die Datenpakete (7) auszuwählen, so dass die mittleren Bitzuverlässigkeiten für die jeweiligen dem Symbol zugeordneten Bits ausgemittelt werden, indem das erste Symbol, das unter Verwendung der ersten Signalkonstellation moduliert wird, mit dem zweiten Symbol kombiniert wird, das unter Verwendung der zweiten Signalkonstellation moduliert wird.

3. Kommunikationsvorrichtung nach Anspruch 1 oder 2, bei der der Codierabschnitt (12) dazu eingerichtet ist, die Grau-Codierung der Symbolbits der Datenpakete auszuführen.

4. Kommunikationsvorrichtung nach einem der Ansprüche 1 bis 3, bei der das verwendete Modulationsschema 16 QAM ist und während der Modulation jeweils eine von zwei Ebenen von mittleren Bitzuverlässigkeiten jedem der vier Symbolbits zugeordnet ist.

5. Kommunikationsvorrichtung nach einem der Ansprüche 1 bis 3, bei der das verwendete Modulationsschema 64 QAM ist und während der Modulation eine von drei Ebenen der mittleren Bitzuverlässigkeiten jedem der sechs Symbolbits zugeordnet ist.

6. ARQ-Übertragungsverfahren mit einer Konstellationsneuordnung in einer Kommunikationsvorrichtung, umfassend folgende Schritte:

Codieren von Datenpaketen mit einer Vorwärtsfehlerkorrektur;
Zuordnen der codierten Datenpakete unter Verwendung einer ersten Signalkonstellation und einer zweiten Signalkonstellation aus einer Vielzahl von vorbestimmten Signalkonstellationen eines 16 oder 64 QAM-Modulationsschemas, um ein erstes Symbol bzw. ein zweites Symbol zu erzeugen, wobei jedes Bit dem ersten Symbol zugeordnet wird und das zweite Symbol eine individuelle Bitzuverlässigkeit gegenüber Konstellationspunkten der vorbestimmten Signalkonstellation aufweist; und
Übertragen des ersten Symbols in einer ersten Übertragung und des zweiten Symbols in einer erneuten Übertragung;

wobei sich für jeden der Konstellationspunkte eine Bitfolge, die mit der ersten Konstellation zugeordnet werden soll, und eine Bitfolge, die mit der zweiten Konstellation zugeordnet werden soll, in Bitpositionen und/oder logischen Werten der Bits voneinander unterscheiden.

**Revendications**

1. Appareil de communication (10) mettant en oeuvre une transmission à requête automatique de répétition ARQ, soit Automatic Repeat reQuest, avec un réarrangement de constellation, comprenant :

   une section de codage (12) qui code des paquets de données avec une correction d'erreur sans voie de retour ;
   une section de mappage (13) qui mappe les paquets de données codés à l'aide d'une première constellation de signal et d'une deuxième constellation de signal parmi une pluralité de constellations de signal prédéterminées d'un système de modulation d'amplitude en quadrature 16 QAM ou 64 QAM, pour générer respectivement un premier symbole et un deuxième symbole, chaque bit mappé par rapport au premier symbole et au deuxième symbole ayant une fiabilité de bit individuelle sur des points de constellation de la constellation de signal prédéterminée ; et
   une section de transmission (30) qui transmet le premier symbole dans une première transmission et le deuxième symbole dans une retransmission ;
   dans lequel, pour chacun des points de constellation, une séquence binaire à mapper à l'aide de la première constellation et une séquence binaire à mapper à l'aide de la deuxième constellation sont différentes entre elles pour au moins l'une des positions binaires ou des valeurs logiques des bits.

2. Appareil de communication selon la revendication 1, comprenant un moyen adapté pour sélectionner la première constellation de signal et la deuxième constellation de signal pour les paquets de données (7) de telle sorte qu'une moyenne est établie pour les fiabilités de bit moyennes des bits respectifs mappés par rapport au symbole en combinant le premier symbole modulé à l'aide de la première constellation de signal avec le deuxième symbole modulé à l'aide de la deuxième constellation de signal.

3. Appareil de communication selon la revendication 1 ou 2, dans lequel la section de codage (12) est adaptée pour coder par code de Gray les bits de symbole des paquets de données.

4. Appareil de communication selon l'une des revendications 1 à 3, dans lequel le système de modulation employé est 16 QAM et, durant la modulation, un niveau parmi deux niveaux de fiabilité de bit moyenne est attribué à chacun des quatre bits de symbole.

5. Appareil de communication selon l'une des revendications 1 à 3, dans lequel le système de modulation employé est 64 QAM et, durant la modulation, un niveau parmi trois niveaux de fiabilité de bit moyenne est attribué à chacun des six bits de symbole.

6. Procédé de transmission ARQ avec un réarrangement de constellation dans un appareil de communication, comprenant les étapes suivantes :

   codage de paquets de données avec une correction d'erreur sans voie de retour ;
   mappage des paquets de données codés à l'aide d'une première constellation de signal et d'une deuxième constellation de signal parmi une pluralité de constellations de signal prédéterminées d'un système de modulation d'amplitude en quadrature 16 QAM ou 64 QAM, pour générer respectivement un premier symbole et un deuxième symbole, chaque bit mappé par rapport au premier symbole et au deuxième symbole ayant une fiabilité de bit individuelle sur des points de constellation de la constellation de signal prédéterminée ; et
   transmission du premier symbole dans une première transmission et du deuxième symbole dans une retransmission ;
   dans lequel, pour chacun des points de constellation, une séquence binaire à mapper à l'aide de la première constellation et une séquence binaire à mapper à l'aide de la deuxième constellation sont différentes entre elles pour au moins l'une des positions binaires ou des valeurs logiques des bits.

Figure 1

# Constellation 1

## Constellation 2

Figure 2 a

EP 2 259 477 B1

Constellation 4

Constellation 3

Figure 2 b

Figure 3

**Constellation 2**

**Constellation 1**

**Figure 4 a**

Figure 4 b

Figure 4 c

Figure 5

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 938207 A

- US 6138260 A

**Non-patent literature cited in the description**

- **S. KALLEL.** Analysis of a type II hybrid ARQ scheme with code combining,. *IEEE Transactions on Communications,* August 1990, vol. 38 (8
- **S. KALLEL ; R. LINK ; S. BAKHTIYARI.** Throughput performance of Memory ARQ schemes. *IEEE Transactions on Vehicular Technology,* May 1999, vol. 48 (3

- **D. CHASE.** Code combining: A maximum-likelihood decoding approach for combining an arbitrary number of noisy packets. *IEEE Trans. Commun.,* May 1985, vol. COM-33, 385-393
- **B.A. HARVEY ; S. WICKER.** Packet Combining Systems based on the Viterbi Decoder. *IEEE Transactions on Communications,* April 1994, vol. 42
- **M.P. SCHMITT.** Hybrid ARQ Scheme employing TCM and Packet Combining. *Electronics Letters,* September 1998, vol. 34 (18